# EUROPEAN PATENT SPECIFICATION

(11) **EP 2 615 190 B1**
(45) Date of publication and mention of the grant of the patent: **12.10.2016**
(21) Application number: 11823298.2
(22) Date of filing: 02.06.2011
(51) Int. Cl.: C22C 38/00, C22C 38/42, C22C 38/48, F16C 29/00, F16C 33/12, F16C 33/32, F16C 33/34, F16C 33/62

(54) **BEARING STEEL WITH EXCELLENT CORROSION RESISTANCE, BEARING PARTS, AND PRECISION MACHINERY COMPONENTS**
LAGERSTAHL MIT AUSGEZEICHNETER KORROSIONSBESTÄNDIGKEIT, LAGERTEILE UND PRÄZISIONSMASCHINENKOMPONENTEN
ACIER À PALIERS AYANT UNE EXCELLENTE RÉSISTANCE À LA CORROSION, PIÈCES DE PALIERS ET COMPOSANTS DE MACHINES DE PRÉCISION

(30) Priority: 08.09.2010 JP 2010201226
(43) Date of publication of application: 17.07.2013
(73) Proprietor: Nippon Steel & Sumitomo Metal Corporation, Tokyo 100-8071 (JP)
(72) Inventor: TAKADA, Hiromasa, Tokyo 100-8071 (JP); TERAMOTO, Shinya, Tokyo 100-8071 (JP)
(74) Representative: Vossius & Partner Patentanwälte Rechtsanwälte mbB
(86) International application number: PCT/JP2011/063185
(87) International publication number: WO 2012/032819

(56) References cited:
- EP-A1- 1 574 592
- EP-A2- 1 357 308
- JP-A- 63 255 345
- JP-A- 2000 087 191
- JP-A- 2000 297 345
- JP-A- 2003 342 677

## Description

### Technical Field

The present invention relates to bearing steel excellent in corrosion resistance which is used as a material for a bearing part or precision equipment part which is used in a relatively mild corrosive environment and/or an environment in which use of a rust preventative or lubricant is limited.

The bearing steel excellent in corrosion resistance of the present invention can be used for a rail and carriage of a linear motion guide system, a ball screw, XY table, roller bearing engaging in rotary motion, slide bearing, steel balls, and other bearing parts as a whole and precision equipment parts provided with bearing functions as a whole.

### Background Art

With regard to some bearing parts, the rolling parts are used in states exposed to relatively mild corrosive environments, but due to demands of the purposes of use, rust preventatives and lubricants sometimes cannot be used. At the present, for such bearing parts, high alloy steel such as martensitic stainless steel is being applied.

The martensitic stainless steel which is prescribed by the Japan Industrial Standard (JIS) is steel which contains Cr: 11.5 mass% or more. In particular, the bearing use SUS440 contains C: 0.6 mass% or more and Cr: 16 mass% or more.

Such steel containing large amounts of Cr not only is expensive, but also is extremely good in hardenability, so in the entire production process from casting to working into steel bars and rod, gradual cooling after heating and working is necessary to prevent season cracking and secure shearability etc.

Further, steel containing large amounts of Cr is low in hot ductility and is high in hardening temperature, so is poor in part manufacturability. As a result, the final part becomes extremely high in price.

To solve such a problem in conventional steel, steel has been developed which has a lower alloy content than SUS440, is excellent in cold workability, and is provided with the necessary corrosion resistance and rolling contact fatigue strength.

For example, PLT 1 discloses corrosion resistant bearing steel which contains C: 0.75 to 0.85 mass% and Cr: 8.0 to 10.5 mass% and which has an average distance between carbide particles of 0.45 to 1.00 µm.

Further, PLT 2 discloses high corrosion resistance, high strength martensitic stainless steel which contains C: 0.25 to 0.50 mass%, Cr: 10 to 16 mass%, and Si: 1.0 mass% or more, has a large C/Cr, and is excellent in machinability.

On the other hand, regarding ferritic stainless steel, for example, PLT 3 discloses ferritic stainless steel to which, in addition to 13 to 22 mass% of Cr, 0.001 to 1 mass% of Sn is added and which is excellent in corrosion resistance and workability. The steel of PLT 3 is provided with a corrosion resistance at least equal to that of SUS304 containing Cr and Ni and with excellent workability.

PLT 4 discloses ferritic stainless steel excellent in high temperature strength which contains 10 to 25 mass% of Cr and 0.05 to 2 mass% of Sn. In the steel of PLT 4, Sn serves to improve the high temperature strength.

Furthermore, as means to solve the problems which are borne by martensitic stainless steel which is excellent in corrosion resistance and is provided with sufficient rolling contact fatigue characteristics, that is, the problems of (a) the large amount of Cr and therefore the high alloy cost and (b) the extremely good hardenability and therefore the need for gradual cooling and softening in the process of production of steel ingots, steel slabs, and steel bars or rods so as to prevent a drop in shearability or delayed fracture, reduction of the amount of Cr is disclosed in PLT 5.

In the bearing steel of PLT 5, Cr is greatly reduced compared with conventional stainless steel while the alloy ingredients which form second phases which act as defects, in particular, S, Al, Ti, and N, are limited to raise the pitting resistance and, furthermore, Mo is reduced and Si, V, and Nb are added to reduce the hardenability and improve the manufacturability of the material.

However, in the bearing steel of PLT 5, the corrosion resistance at the nonhardened parts unavoidably falls. Corrosion resistant steel with a small amount of Cr is corrosion resistant steel which is used in a mild corrosive environment, but from the viewpoint of securing the lifetime of use, improvement of the corrosion resistance of the nonhardened parts is strongly demanded.

PLT 6 discloses hot rolling a steel material, which contains Cu: 0.2 to 0.5 mass% and Sn: 0.03 to 0.30 mass% and has bearings as one of its applications, at a surface temperature of 1150 to 1250°C to prevent the formation of surface defects. However, PLT 6 does not describe the characteristics when using the above steel material as bearing steel. EP 1 574 592 discloses a bearing steel without tin in the composition.

### Citations List

### Patent Literature

PLT 1: Japanese Patent Publication No. 09-195008 A1
PLT 2: Japanese Patent Publication No. 11-217653 A1
PLT 3: Japanese Patent Publication No. 2009-174036 A1
PLT 4: Japanese Patent Publication No. 2000-169943 A1
PLT 5: WO2004/057049 A1
PLT 6: Japanese Patent Publication No. 2008-229652 A1

### Summary of Invention

### Technical Problem

The present invention has as its problem to provide corrosion resistant bearing steel which is reduced in the amount of Cr in which the corrosion resistance is raised to at least the corrosion resistance of conventional corrosion resistant steel which contains Cr: 10 and in which the hot workability required industrially is secured and has as its object to provide bearing steel excellent in corrosion resistance which solves this problem.

### Solution to Problem

Bearing parts are required to have a high hardness of the rolling surface. Therefore, as the material of bearing parts, usually, to improve the quenched hardness, bearing steel which contains C: 0.3 mass% is used.

However, the structure of the nonhardened parts of bearing steel which contains C: 0.3 mass% or more becomes a mixed structure of ferrite, pearlite, and bainite. At the pearlite and bainite, unlike the case of tempered martensite, coarse carbides precipitate, so the nonhardened parts of the above bearing steel fall in corrosion resistance.

For this reason, at nonhardened parts of bearing parts, rust easily forms. Further, the formed rust is liable to drop to the hardened rolling surface and damage the rolling surface.

In the present invention, to improve the corrosion resistance of conventional corrosion resistant bearing parts with small amounts of Cr (below, sometimes referred to as "low Cr corrosion resistant bearing parts"), in particular the corrosion resistance of nonhardened parts, Sn is added to the bearing steel. At that time, the drop in hot workability becomes an issue.

The inventors engaged in intensive studies on the composition of ingredients for keeping the drop in hot workability which accompanies the addition of Sn down to a minimum. As a result, they discovered a composition of ingredients which enables the required hot workability to be secured and which raises the corrosion resistance.

The present invention was made based on the above discoveries and has as its gist the following:
(1) Bearing steel excellent in corrosion resistance which is characterized by containing, by mass%, C: 0.3 to 0.6%, Si: 0.25 to 1.50%, Mn: 0.2 to 0.7%, Cr: 3.0 to 7.0%, Sn: 0.05 to 1.00%, Ni: 0.01 to 2.00%, S: 0.002 to 0.020%, and Al: 0.005 to 0.040%, Cu: 0.0005 to 0.10%, N: 0.02% or less, and O: 0.0015% or less, having a balance of Fe and unavoidable impurities, and having %Sn, %Cu, and %Ni satisfying the following formula: -0.194≤0.12×%Sn+%Cu-0.×%Ni≤0.150
(2) Bearing steel excellent in corrosion resistance as set forth in (1), characterized in that the bearing steel further contains, by mass%, one or both of Nb: 0.01 to 0.10% and V: 0.01 to 0.10%.
(3) Bearing steel excellent in corrosion resistance as set forth in (1) or (2), characterized in that the bearing steel further contains, by mass%, Mo: 0.01 to 0.50%.
(4) A bearing part characterized by comprising bearing steel excellent in corrosion resistance as set forth in any one of (1) to (3) which is worked into a shape of the part and which is induction hardened at its rolling surface.
(5) A precision equipment part characterized by comprising bearing steel excellent in corrosion resistance as set forth in any one of (1) to (3) which is worked into a shape of the part and which is induction hardened at its sliding surface.

### Advantageous Effects of Invention

According to the present invention, it is possible to provide bearing steel which is excellent in corrosion resistance not only at the hardened parts, but also at the nonhardened parts and is provided with hot workability suitable for industrial production and which is suitable as a material for low Cr corrosion resistant bearing parts which are used in relatively mild environments and/or in environments in which use of a rust preventative and lubricant is restricted.

### Brief Description of Drawings

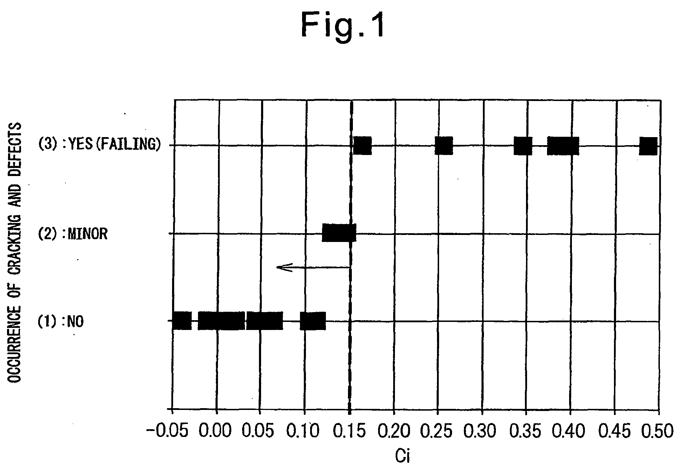

FIG. 1 is a view which shows the relationship between the Ci value (=0.12×%Sn+%Cu-0.1×%Ni) and the state of occurrence of cracking and defects.

### Description of Embodiments

Below, the present invention will be explained in detail.

The inventors engaged in intensive research, from the viewpoint of the composition of ingredients, on a technique for solving the problem of the drop in hot workability when raising the corrosion resistance of conventional low Cr corrosion resistant bearing parts, in particular the corrosion resistance of the nonhardened parts, by adding Sn to the bearing steel used as the material for the same.

As a result, the inventors discovered a composition of ingredients enabling the drop in hot workability to be kept to a minimum.

First, the reasons for limitation of the composition of ingredients of the bearing steel excellent in corrosion resistance of the present invention (below, sometimes referred to as "the invention steel") will be explained. Below, the % relating to the composition of ingredients means mass%.

C: C gives a surface hardness HRC of 52 or more by quenching and tempering and raises the rolling contact fatigue strength, so 0.3% or more is added, preferably 0.4% or more. On the other hand, if over 0.6%, the material hardness becomes excessively high and machining becomes difficult, so the content is made 0.6% or less, preferably 0.5% or less.

Si: Si promotes ferrite transformation and softens the steel bars or rods when producing steel bar or rod materials, so 0.25% or more is added, preferably 0.40% or more. On the other hand, if over 1.50%, the cold and hot deformation resistances rise and the workability falls, so the content is made 1.50% or less, preferably 1.00% or less.

Mn: Mn bonds with S and causes the precipitation of MnS which improves the machinability. To sufficiently cause MnS to precipitate, 0.2% or more is added, preferably 0.4% or more.

Further, Mn is an element which raises the hardenability. If added in a large amount, bainite forms at the structure after rolling the steel bars or rods and the hardness becomes higher than necessary, bending occurs at the cooling bed, and shearing becomes impossible.

For this reason, to make the rolled structure ferrite and pearlite and avoid bending and inability of shearing, Mn is made 0.7% or less, preferably 0.6% or less.

Cr: Cr gives the minimum extent of corrosion resistance in an air environment or mild corrosive environment, so 3.0% or more is added, preferably 4.0% or more.

The greater the Cr, the more the pitting resistance is improved, but if added in excess, the alloy cost rises, so the content is made 7.0% or less, preferably 6.0% or less.

Sn: Sn, like Cr, is an element which forms oxides at the steel material surface to thereby raise the corrosion resistance. In the present invention steel, Sn is added to improve the corrosion resistance, so 0.05% or more is added, preferably 0.10% or more.

On the other hand, Sn is an element which causes the hot workability to drop and which becomes a cause of cracking and defects at the time of working the steel material at a high temperature. In particular, if Sn and Cu are copresent, the high temperature ductility of the steel material remarkably drops and cracking and defects occur when worked at a high temperature.

Sn is added to improve the corrosion resistance, but to secure the required hot workability and manufacturability, the content is made 1.00% or less, preferably 0.70% or less.

Ni: Ni suppresses the occurrence of cracking and defects at the time of hot working, so 0.01% or more is added, preferably 0.05% or more.

Further, Ni, like Cr, raises the corrosion resistance, but if over 2.00%, the hardness after annealing rises and the workability falls, so the content is made 2.00% or less.

To reliably reduce the hardness after rolling, 1.00% or less is preferable.

S: S forms sulfides and lowers the hot workability. Further, the sulfides form preferential starting points for pitting, so the content is made 0.020% or less, preferably 0.010% or less.

On the other hand, S is also an element which improves the machineability. To secure the required machineability, 0.002% or more is added, preferably 0.005% or more.

Al: Al is an element which is essential as a deoxidizing agent at the time of steelmaking. To sufficiently deoxidize steel and improve the rolling contact fatigue characteristics of the bearing part, 0.005% or more is added, preferably 0.008% or more.

However, the oxides which remain in steel as deoxidation products act as starting points for pitting, so Al is made 0.040% or less, preferably 0.030% or less.

Cu: Cu is an element which causes a drop in the hot workability. In particular, in the present invention steel where Sn is added, it has to be reduced as much as possible, so the upper limit is made 0.10%, preferably 0.06% or less.

Entry from the raw materials of the steel to the extent of 0.0005% is unavoidable, so the lower limit is made 0.0005%. Note that, a content of 0.001% or more is allowed.

N: N is an element which is unavoidably present and forms nitrides. Coarse nitrides form starting points for pitting, so the content is made 0.02% or less, preferably 0.01% or less.

The lower limit includes 0%, but reducing N to 0.001% or less would invite a sharp rise in manufacturing costs, so 0.001% is the substantive lower limit.

O: O is an element which is unavoidably present and forms oxides. Oxides, like nitrides, form starting points for pitting and further form the starting points for breakage at the time of a rolling load of the bearing part and thereby cause a drop in the rolling contact fatigue life. For this reason, O is made 0.0015% or less.

In particular, when a high lifetime is required in the bearing part, the content is made 0.0010% or less, preferably 0.0006% or less. The lower limit includes 0%, but reducing O to 0.0001% or less would invite a sharp rise in manufacturing costs, so 0.0001% is the substantive lower limit.

The present invention steel may also contain, in addition to the above ingredients, one or both of Nb and V and/or Mo.

Nb and V: Nb and V precipitate as carbonitrides and refine the austenite at the time of rolling steel bars and rods. Due to the refining of the austenite, the ferrite-pearlite transformation after rolling is promoted and transformation to hard bainite or martensite is prevented.

As a result, bending of the rolled steel material is prevented and further the material is softened and thereby the shearability is improved.

To refine the austenite, each of Nb and V is added to 0.01% or more, preferably each to 0.03% or more. On the other hand, if over 0.10%, the precipitation strengthening action causes the rolled material to rise in hardness, so the content in each case is made 0.10% or less, preferably each 0.07% or less.

Mo: Mo is an element which raises the pitting resistance. To raise the pitting resistance, 0.01% or more is added, preferably 0.04% or more.

Mo is an element which greatly improves the hardenability of steel. If added in a large amount, bainite or martensite is formed in the steel structure after rolling and bending at the cooling bed or inability of shearing occur, so the content is made 0.50% or less.

To reliably prevent the formation of bainite and martensite, 0.30% or less is preferable. More preferable is 0.10% or less.

The present invention steel may include, in addition to the above ingredients, one or more of P, Ca, Mg, Te, Hf, Zr, and Ce in a range not impairing the characteristics of the present invention steel.

P is present in steel as an unavoidable impurity, but if 0.05% or less, does not have any particular effect on hot workability or corrosion resistance.

Ca, Mg, Te, Hf, Zr, and Ce may be added in trace amounts of 10 ppm or so in accordance with the objective such as refining of the sulfides. These elements form oxides which cause cracks and defects, so addition of large amounts is preferably avoided:

-0.194≤0.12×%Sn+%Cu-0.1×%Ni≤0.150:

Sn, which raises the corrosion resistance, on the other hand is an element which lowers the hot workability. For this reason, the balance in the amounts of Sn, which raises corrosion resistance, but lowers hot workability, Cu, which lowers hot workability, and Ni, which raises hot workability, is extremely important in trying to achieve both corrosion resistance and hot workability.

The inventors introduced the parameter Ci defined by the following equation so as to maintain the balance in amounts of Sn, Cu, and Ni in a suitable range and achieve both corrosion resistance and hot workability:

Ci=0.12×%Sn+%Cu-0.1×%Ni

The above parameter expresses the extents of contribution of Sn and Cu to lowering the hot workability and the extent of Ni in raising the hot workability by coefficients based on numerous test results. It is a parameter for overall evaluation of the effects of addition of Sn, Cu, and Ni from the viewpoint of achieving both corrosion resistance and hot workability in the present invention steel containing Sn, Cu, and Ni.

If Ci exceeds 0.150, hot workability suitable for industrial production cannot be secured, so the upper limit is made 0.150, preferably 0.120 or less, more preferably 0.080 or less.

On the other hand, if Ci is less than -0.194, even if hot workability suitable for industrial production can be secured, the required corrosion resistance cannot be secured, so the lower limit is made -0.194, preferably - 0.100 or more, more preferably -0.050 or more.

That is, when the contents of Sn, Cu, and Ni (mass%) satisfy the above formula, the invention steel is provided with the required corrosion resistance and is provided with hot workability suitable for industrial production. As a.result, when the invention steel is being hot rolled and when it is being hot formed into parts, the occurrence of cracking and defects can be prevented.

In the actual process of production of a steel material, there is a step of blooming the cast slab. The workability in the blooming, that is, the occurrence of cracking and defects in the blooming, becomes a problem.

The hot workability of a cast slab is generally inferior to the hot workability of a steel slab, so in the invention steel, the hot workability is evaluated under conditions simulating blooming while changing the Ci so as to determine the contents of Sn, Cu, and Ni (mass%) for preventing cracking when rolling materials of steel bars or rods and defects after rolling.

Test steels having basic compositions of 0.5%C-0.2%Si-0.5%Mn-0.02%P-0.005%S-7%Cr-0.02%Al-0.012%N-bal.Fe and unavoidable impurities and combining 2.0% or less of Sn, 1.0% or less of Cu, and 2.0% or less of Ni in various ways were vacuum melted and cast into 15 kg ingots for evaluation of hot workability.

Each ingot was cut to prepare a cross-section 80 mm square test material. A thermocouple was attached to its center part. The 80 mm square test material was loaded into a 1050°C electric furnace. 30 minutes after the center part of the test material reached 1045°C, the material was taken out. When the surface temperature fell to 1000°C, the material started to be rolled.

The rolling was conducted by three consecutive passes to successively reduce the thickness 80 mm to 64 mm, 51 mm, and 41 mm, then the material was air cooled.

After air cooling, the cross-section of the test material was cut out to examine it for surface defects. The state of defects of less than a depth of 60 µm was judged as "no defects", of a depth of 60 to 100 µm was judged as "slight defects", and of a depth of over 100 µm was judged as "defects present". Note that, when the test material cracked during rolling, the rolling was stopped at the time of cracking.

The above test results are shown in FIG. 1. In bearing steel with a Ci over 0.150, it will be understood that hot workability suitable for industrial production cannot be secured and defects of a depth over 100 µm are formed.

On the other hand, in the present invention steel with a Ci of 0.150 or less, no defects form. It will be understood that if the Ci is 0.120 or less, no defects at all are formed.

When applying the present invention steel with no defects to a bearing part or precision equipment part, the steel is worked to the shape of the part, then the rolling surface or sliding surface is induction hardened. As a result, it is possible to obtain a bearing part and precision equipment part which are excellent in fatigue characteristics and long in life.

### Examples

Next, examples of the present invention will be explained, but the conditions of the examples are just one illustration of the conditions employed so as to confirm the workability and effects of the present invention. The present invention is not limited to this illustration of conditions.

The present invention can employ various conditions so long as not departing from the gist of the present invention and achieving the object of the present invention.

### (Examples)

First, the hot workability of cast slabs was evaluated. Steel of each of the composition of ingredients which are shown in Table 1 was vacuum melted in an amount of 16 kg and cast into an ingot. This was cut to prepare a cross-section 80 mm square block shaped test material for use for tests of hot workability.

| Table 1 | | | | | | | | | | | | | | | | (mass%) | |
|---|---|---|---|---|---|---|---|---|---|---|---|---|---|---|---|---|---|
| No. | Type | C | Si | Mn | P | S | Ni | Cu | Cr | Sn | Mo | Nb | V | Al | N | O | Ci |
| 1 | Inv. Steel | 0.50 | 0.25 | 0.50 | 0.025 | 0.005 | 0.50 | 0.01 | 6.0 | 0.52 | 0.5 | - | - | 0.025 | 0.0105 | 0.0009 | 0.022 |
| 2 | Inv. Steel | 0.58 | 0.70 | 10.48 | 0.024 | 0.007 | 0.25 | 0.03 | 5.1 | 0.33 | - | - | - | 0.040 | 0.0058 | 0.0010 | 0.045 |
| 3 | Inv. Steel | 0.51 | 0.81 | 0.45 | 0.015 | 0.008 | 1.90 | 0.03 | 3.0 | 1.00 | - | - | - | 0.016 | 0.0077 | 0.0011 | -0.040 |
| 4 | Inv. Steel | 0.52 | 1.45 | 0.40 | 0.010 | 0.011 | 0.99 | 0.03 | 5.9 | 0.49 | - | 0.02 | 0.03 | 0.015 | 0.0100 | 0.0008 | -0.010 |
| 5 | Inv. Steel | 0.53 | 0.55 | 0.22 | 0.024 | 0.008 | 0.02 | 0.001 | 6.5 | 0.10 | 0.1 | 0.06 | - | 0.020 | 0.0179 | 0.0007 | 0.011 |
| 6 | Inv. Steel | 0.51 | 0.26 | 0.66 | 0.020 | 0.004 | 0.01 | 0.05 | 6.0 | 0.53 | - | - | 0.06 | 0.020 | 0.0044 | 0.0009 | 0.113 |
| 7 | Inv. Steel | 0.52 | 0.30 | 0.55 | 0.019 | 0.012 | 0.03 | 0.01 | 6.9 | 0.84 | 0.3 | - | - | 0.012 | 0.0105 | 0.0011 | 0.108 |
| 8 | Inv. Steel | 0.50 | 0.71 | 0.49 | 0.020 | 0.009 | 0.31 | 0.10 | 6.5 | 0.64 | - | - | - | 0.007 | 0.0096 | 0.0005 | 0.146 |
| 9 | Inv. Steel | 0.31 | 0.72 | 0.70 | 0.026 | 0.010 | 0.05 | 0.01 | 6.4 | 0.50 | 0.1 | 0.03 | 0.03 | 0.031 | 0.0120 | 0.0010 | 0.065 |
| 10 | Inv. Steel | 0.52 | 0.59 | 0.47 | 0.048 | 0.005 | 0.01 | 0.001 | 6.4 | 0.44 | - | - | - | 0.025 | 0.0101 | 0.0009 | 0.053 |
| 11 | Inv. Steel | 0.53 | 0.25 | 0.55 | 0.008 | 0.009 | 0.01 | 0.10 | 6.0 | 0.05 | 0.05 | - | 0.05 | 0.030 | 0.0055 | 0.0011 | 0.105 |
| 12 | Inv. Steel | 0.49 | 0.30 | 0.46 | 0.009 | 0.008 | 0.001 | 0.10 | 6.1 | 0.25 | - | - | - | 0.040 | 0.0060 | 0.0010 | 0.130 |
| 13 | Comp.steel | 0.45 | 0.32 | 0.52 | 0.007 | 0.005 | 0.001 | 0.11 | 6.0 | 0.45 | - | - | - | 0.034 | 0.0048 | 0.0009 | 0.164 |
| 14 | Comp.steel | 0.45 | 0.28 | 0.49 | 0.009 | 0.010 | 0.003 | 0.09 | 6.0 | 0.60 | - | - | - | 0.034 | 0.0048 | 0.0009 | 0.162 |
| 15 | Comp.steel | 0.50 | 0.30 | 0.50 | 0.022 | 0.012 | 0.50 | 0.32 | 4.5 | 1.06 | - | - | - | 0.031 | 0.0097 | 0.0010 | 0.397 |
| 16 | Comp.steel | 0.51 | 0.25 | 0.50 | 0.025 | 0.020 | 0.001 | 0.09 | 5.0 | 3.30 | - | - | 0.04 | 0.025 | 0.0181 | 0.0015 | 0.486 |
| 17 | Comp.steel | 0.53 | 0.71 | 0.48 | 0.030 | 0.050 | 0.50 | 0.08 | 4.0 | 0.48 | 0.3 | - | - | 0.022 | 0.0125 | 0.0011 | 0.088 |
| 18 | Comp.steel | 0.49 | 0.24 | 0.48 | 0.072 | 0.007 | 0.01 | 0.11 | 6.0 | 1.22 | 0.5 | - | - | 0.027 | 0.0182 | 0.0010 | 0.255 |
| 19 | Comp.steel | 0.57 | 0.55 | 0.70 | 0.030 | 0.012 | 2.40 | 0.41 | 2.6 | 1.78 | 0.8 | 0.02 | - | 0.095 | 0.0050 | 0.0009 | 0.384 |
| 20 | Comp.steel | 0.68 | 1.47 | 0.96 | 0.033 | 0.004 | 0.22 | 0.30 | 4.0 | 0.56 | | - | - | 0.023 | 0.0176 | 0.0010 | 0.345 |
| 21 | Comp.steel | 0.53 | 0.57 | 1.02 | 0.033 | 0.012 | 0.01 | 0.01 | 6.5 | 0.69 | 0.4 | - | 0.09 | 0.034 | 0.0040 | 0.0009 | 0.092 |
| 22 | Comp.steel | 0.53 | 0.66 | 0.50 | 0.021 | 0.035 | 0.43 | 0.08 | 5.5 | - | - | - | - | 0.029 | 0.0166 | 0.0010 | 0.040 |
| 23 | Comp.steel | 0.52 | 0. 40 | 0.48 | 0.050 | 0.011 | 0.00 | 0.09 | 6.1 | - | 0.1 | - | - | 0.033 | 0.0136 | 0.0018 | 0.090 |
| 24 | Comp.steel | 0.27 | 0.53 | 0.69 | 0.035 | 0.010 | 0.01 | 0.05 | 5.0 | 0.44 | - | - | - | 0.025 | 0.0246 | 0.0010 | 0.102 |
| 25 | Comp.steel | 0.50 | 0.26 | 0.20 | 0.030 | 0.012 | 0.01 | 0.001 | 6.5 | - | - | - | 0.10 | 0.030 | 0.0175 | 0.0014 | 0.000 |
| 26 | Comp.steel | 0.54 | 0.23 | 0.25 | 0.022 | 0.018 | 0.20 | 0.05 | 10.0 | - | 0.5 | - | - | 0.017 | 0.0253 | 0.0013 | 0.030 |

Each test material was loaded into a 1200°C electric furnace. 30 minutes after the center part of the test material reached 1150°C, the material was taken out and cooled in the air. When the surface temperature fell to 1000°C, the material started to be rolled.

The rolling was conducted by three consecutive passes to successively reduce the thickness 80 mm to 64 mm, 51 mm, and 41 mm, then the material was air cooled.

After air cooling, the test material was cut on the centerline parallel to the rolling direction to examine a cross-section 30 mm length of the center part for surface defects.

The state of defects of less than a depth of 60 µm was judged as "no defects", of a depth of 60 to 100 µm was judged as "slight defects", and of a depth of over 100 µm was judged as "defects present". Note that, when the test material cracked during rolling, the rolling was stopped at the time of cracking. The results of judgment are shown in Table 2.

**Table 2**

| No. | Type | Evaluation of cracking and defects (1) None (passing) (2) Minor (passing) (3) Present (failing) | Results of composite temperature/humidity cyclic corrosion test | | | | Ci |
|---|---|---|---|---|---|---|---|
| | | | After 4 cycles | After 8 cycles | After 12 cycles Corrosion resistance judgment Good to fair: passing Poor: failing | After 16 cycles | |
| 1 | Inv. steel | (1) | Good | Good | Good | Good | 0.022 |
| 2 | Inv. steel | (1) | Good | Good | Fair | Fair | 0.045 |
| 3 | Inv. steel | (1) | Good | Fair | Fair | Fair | -0.040 |
| 4 | Inv. steel | (1) | Good | Good | Fair | Fair | -0.010 |
| 5 | Inv. steel | (1) | Good | Good | Fair | Fair | 0.011 |
| 6 | Inv. steel | (1) | Good | Good | Fair | Fair | 0.113 |
| 7 | Inv. steel | (1) | Good | Fair | Fair | poor | 0.108 |
| 8 | Inv. steel | (2) | Good | Fair | Fair | Fair | 0.146 |
| 9 | Inv. steel | (1) | Good | Fair | Fair | Fair | 0.065 |
| 10 | Inv. steel | (1) | Good | Good | Good | Fair | 0.053 |
| 11 | Inv. steel | (1) | Good | Fair | Fair | poor | 0.105 |
| 12 | Inv. steel | (2) | Good | Good | Fair | Fair | 0.130 |
| 13 | Comp.steel | (3) | *cracking occurred, | so not evaluated | | | 0.164 |
| 14 | Comp.steel | (3) | *cracking occurred, | so not evaluated | | | 0.162 |
| 15 | Comp.steel | (3) | *cracking occurred, | so not evaluated | | | 0.397 |
| 16 | Comp.steel | (3) | *cracking occurred, | so not evaluated | | | 0.486 |
| 17 | Comp.steel | (1) | Poor | Poor | Poor | Poor | 0.088 |
| 18 | Comp.steel | (3) | *cracking occurred, | so not evaluated | | | 0.255 |
| 19 | Comp.steel | (3) | *cracking occurred, | so not evaluated | | | 0.384 |
| 20 | Comp.steel | (3) | *cracking occurred, | so not evaluated | | | 0.345 |
| 21 | Comp.steel | (1) | Good | Fair | Fair | Fair | 0.092 |
| 22 | Comp.steel | (1) | Poor | Poor | Poor | Poor | 0.040 |
| 23 | Comp.steel | (1) | Fair | Fair | Poor | Poor | 0.090 |
| 24 | Comp.steel | (1) | Good | Fair | Poor | Poor | 0.102 |
| 25 | Comp.steel | (1) | Fair | Fair | Poor | Poor | 0.000 |
| 26 | Comp.steel | (1) | Good | Poor | Poor | Poor | 0.030 |

| | | | | | | | |
|---|---|---|---|---|---|---|---|
| Ci=0.12×%Sn+%Cu-0.1x%Ni | | | | | | | |

As shown in Table 2, in the Invention Steel No. 1 to No. 12, during rolling, the rolling was completed without occurrence of cracking or defects. However, in the Comparative Steel Nos. 13 to 16 and 18 to 20 with a Ci value (=0.12×%Sn+%Cu-0.1x%Ni) of over 0.15%, cracking or defects occurred during rolling.

Next, all of the rolled invention steels and Comparative Steel Nos. 17, 21 to 25, and 26 where no cracking or defects occurred (conventional steels) were subjected to the following corrosion test.

From each rolled test material, a diameter 30mmx200mm rod was cut out in a direction parallel to the rolling direction to form a test piece. The above test piece was treated on its surface by induction hardening, then was cut at its center in the length direction. The cut surface was finished by #800 sandpaper. The finished surface was used as the test surface.

The corrosion resistance was evaluated based on JIS C0028 by the state of rusting by a composite temperature/humidity cyclic test with no low temperature cycle (24 hours/cycle). The results of evaluation of the state of rusting are shown together in Table 2.

In Table 2, "Good" indicates a state of rusting with not more than five minor pitting locations on the test surface as a whole, "Fair" indicates a state of minor occurrence of pitting at 5 to 25 locations, and "Poor" indicates a state of rusting with over 25 locations of pitting.

Conventional Steel No. 26 (conventional steel) is steel which contains Cr: 10.0% (see Table 1). Its corrosion resistance serves as the standard for evaluation of the corrosion resistance of the present invention steel. As shown in Table 2, after 8 cycles, corrosion rapidly progressed resulting in inferior corrosion resistance compared with the invention steels.

On the other hand, even if the nonhardened parts of the invention steels started rusting after 8 cycles, the rust was only minor in each case compared with the Conventional Steel No. 26.

Comparative Steel No. 17 has a large S of 0.050% (see Table 1) and had a "Poor" state of rusting after 4 cycles. Comparative Steel No. 21 has a high Mn outside of the range of the present invention. Even if Mn is large in amount, it does not greatly affect the corrosion resistance, but hard bainite and martensite easily are mixed in the structure of the rolled material and the shearability after rolling and delayed fracture characteristics deteriorated.

Comparative Steel No. 22 has a large amount of S and also has no Sn added (see Table 1). Large numbers of rust locations were observed after 4 cycles. Comparative Steel No. 23 has no Sn added and further has a large amount of O. The rust resistance was inferior compared with the invention steels and the standard No. 26 (conventional steel).

Comparative Steel No. 24 has a large amount of N and is inferior in rust resistance. Further, Comparative Steel No. 24 has too small an amount of C and cannot give the quenched hardness required for bearing steel. Comparative Steel No. 25 has no Sn added and has an amount of rusting greater than the invention steels and the standard No. 26 (conventional steel).

Comparative Steel No. 26 is a conventional low Cr corrosion resistant steel. It stresses machinability, so the amount of S exceeds 0.015%. Further, the amount of N is also large. For this reason, No. 26 (conventional steel) is inferior in corrosion resistance, despite the amount of Cr being greater than in the invention steels, to the corrosion resistance of the invention steels.

### Industrial Applicability

As explained above, according to the present invention, it is possible to provide bearing steel which is excellent in corrosion resistance not only at the hardened parts, but also at the nonhardened parts and is provided with hot workability suitable for industrial production and which is suitable as a material for low Cr corrosion resistant bearing parts which are used in relatively mild environments and/or in environments in which use of a rust preventative and lubricant is restricted.

The present invention can be used for a rail and carriage of a linear motion guide system, a ball screw, XY table, roller bearing engaging in rotary motion, slide bearing, steel balls, and other bearing parts as a whole and precision equipment parts provided with bearing functions as a whole.

## Claims

1. Bearing steel excellent in corrosion resistance which is **characterized by** containing, by mass%, C: 0.3 to 0.6%, Si: 0.25 to 1.50%, Mn: 0.2 to 0.7%, Cr: 3.0 to 7.0%, Sn: 0.05 to 1.00%, Ni: 0.01 to 2.00%, S: 0.002 to 0.020%, Al: 0.005 to 0.040%, Cu: 0.0005 to 0.10%, N: 0.02% or less, and O: 0.0015% or less, and further optionally contains, by mass%, one or more elements which are selected from Nb: 0.01 to 0.10%, V: 0.01 to 0.10%, and Mo: 0.01 to 0.50%, and having a balance of Fe and unavoidable impurities, and having %Sn, %Cu, and %Ni satisfying the following formula:
-0.194≤0.12×%Sn+%Cu-0.1×%Ni≤0.150.

2. Bearing steel excellent in corrosion resistance as set forth in claim 1, **characterized in that** said bearing steel further contains, by mass%, one or both of Nb: 0.01 to 0.10% and V: 0.01 to 0.10%.

3. Bearing steel excellent in corrosion resistance as set forth in claim 1 or 2, **characterized in that** said bearing steel further contains, by mass%, Mo: 0.01 to 0.50%.

4. A bearing part **characterized by** comprising bearing steel excellent in corrosion resistance as set forth in any one of claims 1 to 3 which is worked into a shape of the part and which is induction hardened at its rolling surface.

5. A precision equipment part **characterized by** comprising bearing steel excellent in corrosion resistance as set forth in any one of claims 1 to 3 which is worked into a shape of the part and which is induction hardened at its sliding surface.

## Patentansprüche

1. Lagerstahl mit ausgezeichneter Korrosionsbeständigkeit, welcher **dadurch gekennzeichnet ist, dass** er, in Massen-%, enthält: C: 0,3 bis 0,6 %, Si: 0,25 bis 1,50 %, Mn: 0,2 bis 0,7 %, Cr: 3,0 bis 7,0 %, Sn: 0,05 bis 1,00 %, Ni: 0,01 bis 2,00 %, S: 0,002 bis 0,020 %, Al: 0,005 bis 0,040 %, Cu: 0,0005 bis 0,10 %, N: 0,02 % oder weniger, und O: 0,0015 % oder weniger, und ferner gegebenenfalls ein oder mehr Elemente, welche ausgewählt sind aus Nb: 0,01 bis 0,10 %, V: 0,01 bis 0,10 % und Mo: 0,01 bis 0,50 %, in Massen-%, enthält und einen Rest an Fe und unvermeidbaren Verunreinigungen aufweist und %Sn, %Cu und %Ni aufweist, welche die folgende Formel erfüllen:
-0,194≤0,12×%Sn+%Cu-0,1×%Ni≤0,150.

2. Lagerstahl mit ausgezeichneter Korrosionsbeständigkeit gemäß Anspruch 1, **dadurch gekennzeichnet, dass** der Lagerstahl ferner, in Massen-%, eines oder beides von Nb: 0,01 bis 0,10 % und V: 0,01 bis 0,10 % enthält.

3. Lagerstahl mit ausgezeichneter Korrosionsbeständigkeit gemäß Anspruch 1 oder 2, **dadurch gekennzeichnet, dass** der Lagerstahl ferner, in Massen-%, Mo: 0,01 bis 0,50 % enthält.

4. Ein Lagerteil, **dadurch gekennzeichnet, dass** es den Lagerstahl mit ausgezeichneter Korrosionsbeständigkeit gemäß einem der Ansprüche 1 bis 3 umfasst, welcher zu einer Form des Teils verarbeitet wird und welcher an dessen Walzoberfläche induktionsgehärtet wird.

5. Ein Präzisionsgeräteteil, **dadurch gekennzeichnet, dass** es den Lagerstahl mit ausgezeichneter Korrosionsbeständigkeit gemäß einem der Ansprüche 1 bis 3 umfasst, welcher zu einer Form des Teils verarbeitet wird und welcher an dessen Gleitfläche induktionsgehärtet wird.

## Revendications

1. Acier à paliers ayant une excellente résistance à la corrosion qui est **caractérisé par le fait qu'**il contient, en % en masse, C : de 0,3 à 0,6 %, Si : de 0,25 à 1,50 %, Mn : de 0,2 à 0,7 %, Cr : de 3,0 à 7,0 %, Sn : de 0,05 à 1,00 %, Ni : de 0,01 à 2,00 %, S : de 0,002 à 0,020 %, Al : de 0,005 à 0,040 %, Cu : de 0,0005 à 0,10 %, N : 0,02 % ou moins et O: 0,0015 % ou moins, et qui contient facultativement en outre, en % en masse, un ou plusieurs éléments qui sont choisis parmi le Nb : de 0,01 à 0,10 %, le V : de 0,01 à 0,10 % et le Mo : de 0,01 à 0,50 %, le reste étant constitué de Fe et d'impuretés inévitables, et présentant un % de Sn, un % de Cu et un % de Ni satisfaisant la formule suivante :
-0,194 ≤ 0,12 × % de Sn + % de Cu - 0,1 × % de Ni ≤ 0,150

2. Acier à paliers ayant une excellente résistance à la corrosion tel que décrit dans la revendication 1, **caractérisé en ce que** ledit acier à paliers contient en outre, en % en masse, l'un ou les deux de Nb : de 0,01 à 0,10 % et V : de 0,01 à 0,10%.

3. Acier à paliers ayant une excellente résistance à la corrosion tel que décrit dans la revendication 1 ou 2, **caractérisé en ce que** ledit acier à paliers contient en outre, en % en masse, du Mo : de 0,01 à 0,50 %.

4. Pièce de palier **caractérisée par le fait qu'**elle comprend un acier à paliers ayant une excellente résistance à la corrosion tel que décrit dans l'une quelconque des revendications 1 à 3 qui est façonné pour prendre la forme de la pièce et qui est trempé par induction au niveau de sa surface de roulement.

5. Pièce d'équipement de précision **caractérisée par le fait qu'**elle comprend un acier à paliers ayant une excellente résistance à la corrosion tel que décrit dans l'une quelconque des revendications 1 à 3 qui est façonné pour prendre la forme de la pièce et qui est trempé par induction au niveau de sa surface de glissement.
